# EUROPÄISCHE PATENTSCHRIFT

(11) **EP 0 579 856 B1**
(45) Veröffentlichungstag und Bekanntmachung des Hinweises auf die Patenterteilung: **30.08.1995**
(21) Anmeldenummer: 92112622.3
(22) Anmeldetag: 23.07.1992
(51) Int. Cl.: A45D 44/00, A47J 27/04, A47K 10/06

(54) **Vorrichtung zum Heissbefeuchten von Gesichtstüchern**
Device for heating and moistening face towels
Dispositif pour chauffer et humidifier des serviettes de visage

(43) Veröffentlichungstag der Anmeldung: 26.01.1994
(73) Patentinhaber: Tschauder, Gunter, D-61273 Wehrheim (DE)
(72) Erfinder: Tschauder, Gunter, D-61273 Wehrheim (DE)
(74) Vertreter: Beil, Hans Chr., Dr.

(56) Entgegenhaltungen:
- EP-A- 0 495 396
- US-A- 4 947 026

## Beschreibung

Gegenstand der Erfindung ist eine Vorrichtung zum Heißbefeuchten von Gesichtstüchrern mit den Merkmalen gemäß den Ansprüchen.

Befeuchtete und erhitzte Gesichtstücher, bei denen dem Dampf vorzugsweise ätherische Öle zugesetzt sind, sind ein bekanntes Mittel zur Erfrischung und werden gerne von Fluggesellschaften oder in Restaurants zur Erfrischung der Fluggäste oder Kunden ausgegeben.

Üblicherweise werden die Handtücher angefeuchtet, gerollt und entweder in Aluminium-Folie eingewickelt im Heißluftherd oder in Kunststoff-Folie eingewickelt im Heißluft- oder Mikrowellenherd erhitzt, dann aus der Verpackung ausgewickelt und an die Geste ausgegeben.

Das Ein- und Auswickeln ist umständlich und verbietet insbesondere den Einsatz solcher Gesichtstücher an fast allen Orten und bei Gelegenheiten, bei denen nicht Heißluftherde oder dergleichen vorhanden sind.

In US-A-3 902 044 und US-4 084 080 werden Vorrichtungen vorgeschlagen, die mittels des in ihnen erzeugten Dampfes ein Erhitzen und Befeuchten von Tüchern erlauben sollen. Praktische Versuche haben jedoch ergeben, daß auf diese Weise die Tücher weder ausreichend erhitzt werden können noch ausreichende Mengen an Feuchtigkeit aufnehmen.

US-A-4 947 026 zeigt eine Vorrichtung, bei der zum Befeuchten von Tüchern einerseits in einer unter den Tüchern angeordneten offenen Schale Wasser bis zum Kochen erhitzt wird und dadurch Wasserdampf entsteht, andererseits das heiße Wasser mittels einer Pumpe von oben auf die Tücher aufgetropft wird. Diese aufwendige Gestaltung ist für den praktischen Gebrauch ungeeignet, weil insbesondere einerseits der offene Wasserbehälter ein Verschmutzen des Wassers und ein Überschwappen des Wassers beim Anstoßen an die Vorrichtung nicht ausschließt und andererseits das aufwendige Pumpsystem mangels ausreichender zeitlicher Kontrolle nicht gewährleistet, daß die Tücher immer gleichmäßig und ausreichend befeuchtet, aber nicht zu naß werden. Zusätzlich muß das gesamte Wasser in dem Behälter, das die Heizschleife zunächst zumindest bedecken muß, zum Kochen gebracht werden.

Ziel der vorliegenden Erfindung ist die Bereitstellung ines Geräts zum Heißbefeuchten von Tüchern, das die Nachteile bekannter Geräte vermeidet und leicht und sicher zu bedienen ist.

Diese Aufgabe wird dadurch gelöst, daß die zu befeuchtenden Handtücher im Innenraum des Geräts auf steilgiebelähnliche Träger gelegt werden, unter der Bodenplatte des Innenraums des Geräts eine Heizvorrichtung für das Wasser angebracht ist, durch die einerseits die Bodenplatte beheizt wird und durch die andererseits das erhitzte Wasser einem unter der Decke des Innenraums angebrachten Rohrsystem ohne besondere Pumpvorrichtung zugeführt und dort auf die Handtücher gespritzt wird. Von den Handtüchern nicht aufgenommenes oder überschüssiges Wasser tropft auf die Bodenplatte zurück und verdampft von dort wieder. Das aufzuheizende Wasser wird einem, gegebenenfalls aus einem größeren Vorratsbehälter nachfüllbaren, Portionsbehälter entnommen, der seinerseits so dimensioniert ist, daß die darin enthaltene Wassermenge gerade für eine ausreichende Befeuchtung und Erhitzung ausreicht. Anhand der beigefügten Zeichnungen wird die Erfindung näher erläutert.
Figur 1 zeigt eine Front-/Innenansicht des Geräts,
Figur 2 ist eine perspektifische Darstellung des Trägersystems für die Tücher,
Figur 3 ist eine schematische Darstellung des Sprühsystems,

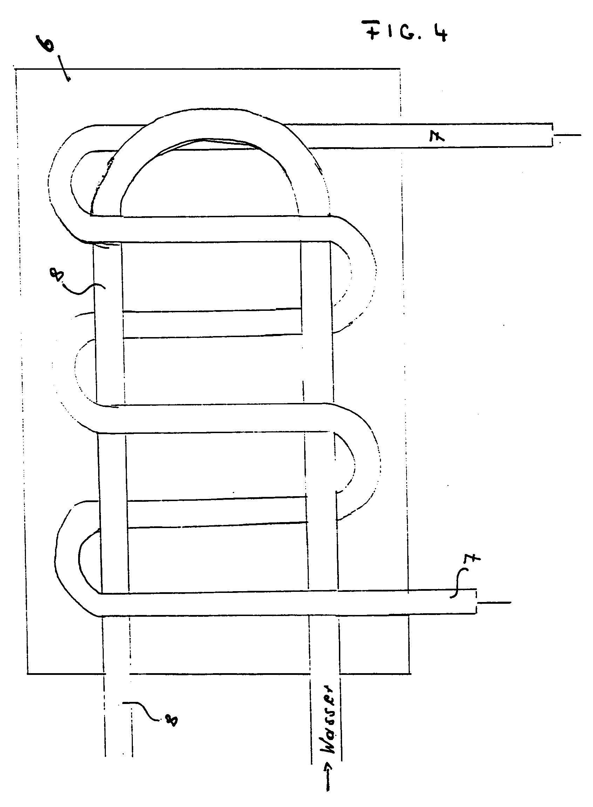

Figur 4 ist eine schematische Darstellung des Heizkörpersystems.

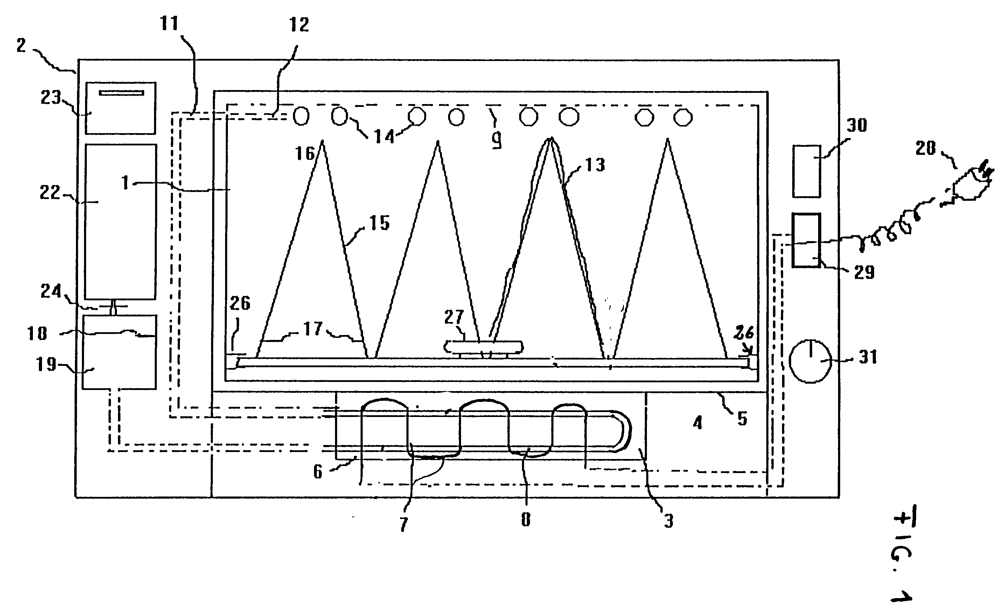

Wie aus Figur 1 ersichtlich ist, besteht die erfindungsgemäße Vorrichtung aus einem Außenkörper (2) und einem, durch eine nicht gezeichnete Fronttüre zugänglichen Innenkörper (1). Unter der Metallbodenplatte (5) des Innenkörpers (1) ist in einem abgeschlossenen Raum (4) das Heizkörpersystem angebracht. Es besteht vorzugsweise aus einer Aluminiumplatte (6), in die ein Rohrheizkörper (7) und ein Wasserrohr (8) aus Edelstahl eingegossen sind. Dieses an der Oberfläche plane Heizkörpersystem (3) wird unter der Metallbodenplatte (5) des Innenkörpers (1) direkt an dieser befestigt, beispielsweise durch Schrauben. Der Rohrheizkörper (7) erhitzt die Aluminiumplatte (6) und damit die Metallbodenplatte (5) des Innenkörpers (1) und gleichzeitig das Wasser in dem Wasserrohr(8). Das gesamte Heizkörpersystem (3) ist thermostatisch geregelt.

Das Wasserrohr (8) ist einerseits mit dem Portionsbehälter (19) und andererseits über die Leitung (11) mit dem Sprühsystem (12) verbunden. Wenn das Wasser in dem Wasserrohr (8) erhitzt wird, steigt es in den Schlauch (11) thermisch bis zum Sprühsystem (12) auf, wo es über den ausgelegten Tüchern (13) versprüht wird.

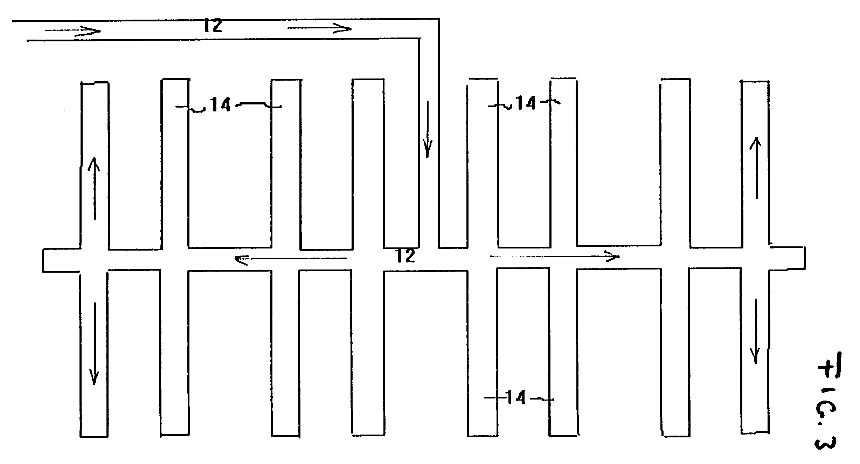

Das Sprühsystem (12) ist an der Decke (9) des Innenkörpers (1) angebracht und besteht, wie Figur 3 zeigt, aus jeweils vier parallel verlaufenden Rohren (14) über jedem darunter befindlichen Tuch, und zwar rechts und links von dem Giebel (16) des jeweiligen Tuchträgers (15). Die Rohre (14) weisen an ihrer Unterseite Löcher auf, die es ermöglichen, daß das heiße Wasser auf die darunter befindlichen Tücher gesprüht wird.

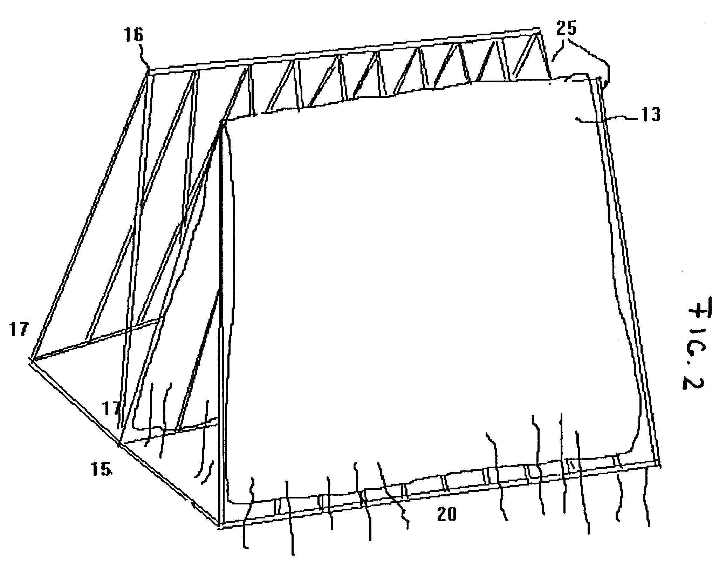

Die Trägerkonstruktion (15) für die Tücher (13) hat die Form mehrerer nebeneinander stehender, steiler Giebeldächer (25), wie Figur 2 zeigt. Ein vorzugsweise aus Leichtmetall bestehendes Gestell,das auf Schienen (26) aus dem Innenkörper (1) herausgezogen werden kann, trägt die einzelnen Giebeldächer (25), die aus dünnen Metallstäben bestehen und so sowohl den Zugang von heißem Sprühwasser wie heißem Dampf so wenig wie möglich behindern. Die Tücher werden einzeln auf ein solches Dach gelegt und können dann aufgrund der gewählten Anordnung der Rohre (14) optimal von oben befeuchtet werden Die Oberkante (16) der Träger (15) liegt dabei dicht unter den Rohren (14).

Das nach dem Einschalten des Geräts im Heizkörpersystem (3) erhitzte und rein thermisch durch die Rohre (14) gepreßte heiße Wasser verdampft teilweise an den Lochrändern und erreicht teils als heißer Dampf, teils als heißes Wasser die zu befeuchtenden Tücher. Wenn die dosierte Wassermenge aus dem Portionsbehälter (19) verbraucht ist, endet das Besprühen von oben automatisch. Die Tücher haben dann den optimalen Feuchtigkeitsgrad erhalten. Die optimale Wassermenge kann auf dem Portionsbehälter (19) durch eine entsprechende Markierung (18) gekennzeichnet werden, so daß geringfügige Abwandlungen des Feuchtigkeitsgrades der Tücher durch Einfüllen einer kleineren oder größeren Menge in den Portionsbehälter für den Anwender möglich sind.

Überschüssiges Wasser, das an den Tüchern vorbeispritzt, fällt auf die erhitzte Bodenplatte (5) und verdampft so. Auch das im Innenraum sich sammelnde Dampfkondensat gelangt auf die Bodenplatte und verdampft dort erneut. Wenn der Sprühvorgang von oben wegen des Aufbrauchs des Wasservorrats aus dem Portionsbehälter beendet ist, ist durch diesen Dampfkreislauf sichergestellt, daß die feuchten Tücher auch danach weiter heiß bleiben. Andererseits hat der heiße Dampf keinen Einfluß auf den Feuchtigkeitsgrad der Tücher mehr. Wenn dieser aufgrund des Besprühens einmal erreicht ist, bleibt er erhalten, ohne daß es weiterer Regelung seitens des Benutzers bedarf. Daß das Heizkörpersystem (3) thermostatisch auch in Abhängigkeit davon, ob das Rohr (8) noch Wasser enthält oder nicht, geregelt wird, ist selbstverständlich. Insgesamt ist eine Regelung per Hand weder für den Befeuchtungsprozess noch für den Vorgang des Erhitzens notwendig.

Neben dem Portionsbehälter (19) weist die Vorrichtung vorzugsweise einen größervolumigen Vorratsbehälter (22) auf, der über einen ausklappbaren Einfüllstutzen (23) befüllt wird und Wasser für mehrere Heizvorgänge aufnehmen kann. Zwischen dem Vorratsbehälter (22) und dem Portionsbehälter (19) ist ein Hahn (24) angebracht, der manuell geöffnet und geschlossen wird, sobald der Wasserstand im Postionsbehälter (19) die vorgegebene Markierung (18) erreicht hat. Es ist auch möglich, diesen Befüllvorgang in geeigneter Weise zu automatisieren.

Das Gerät wird mit einem normalen Sicherheitsstecker (28) an die Stromversorgung des Haushaltsstroms angeschlossen. Das Gerät weist vorzugsweise ein Ein-/Ausschalter (29) auf. Wenn das Gerät eingeschaltet ist, kann dies durch eine Leuchtanzeige (30) angezeigt werden. Durch geeignete Schaltung kann der Zeitpunkt des Erreichens der optimalen Befeuchtung der Tücher durch ein akustisches Signal angezeigt werden. Da es sehr viele Anwendungen gibt, bei denen ein solches akustisches Signal aber störend wirken kann, wie beispielsweise bei Konferenzen, kann durch einen Signalschalter (31) das akustische Signal auch ausgeschaltet werden.

## Patentansprüche

1. Vorrichtung zum Heißbefeuchten von Gesichtstüchern mit einem beheizbaren Behälter für das Wasser, einer Anordnung zum Aufbringen von heißem Wasser auf die Tücher von oben bestehend aus einem an der Decke (9) des Innenraums (1) angebrachten Sprühsystem (12) und einem Träger für die Tücher, **dadurch gekennzeichnet,** daß
a) das Erhitzen des Wassers in einem Heizkörpersystem (3), bestehend aus einem Heizkörper (7) und einem Wasserrohr(8), erfolgt, wobei das Wasserrohr einerseits mit einem Portionsbehälter (19) und andererseits mit einem Sprühsystem (12) verbunden ist,
b) der Heizkörper von unten an der Bodenplatte (5) des Innenkörpers (1) der Vorrichtung angeordnet ist,
c) die Träger (15) für die Tücher eine steilgiebelartige Form haben und
d) das Sprühsystem (12) aus den Zuleitungen (12) sowie dem parallel zu den Giebeln (16) der Träger (15) rechts und links von diesen angeordneten Rohren (14) besteht, wobei die Rohre an ihrer Unterseite Auslassöffnungen aufweisen.

2. Vorrichtung nach Anspruch 1, **dadurch gekennzeichnet,** daß der Heizkörper (7) die Form eines Rohrheizkörpers hat und zusammen mit dem Wasserrohr (8) in eine oben plane Aluminiumplatte (6) eingegossen ist.

3. Vorrichtung nach einem der Ansprüche 1 oder 2, **dadurch gekennzeichnet,** daß die Träger (15) aus dünnen Metallstäben bestehen und auf einem Metallrahmen befestigt sind, der auf Schienen (26) aus dem Innenkörper(1) herausgezogen werden kann.

4. Vorrichtung nach einem oder merherer der Ansprüche 1 bis 3, **dadurch gekennzeichnet,** daß zur Befüllung des Portionsbehälters (19) ein Vorratsbehälter (22) vorgesehen und in der Verbindungsleitung zwischen beiden ein Absperrhahn (24) angeordnet ist.

## Claims

1. Device for heating and moistening face towels, having a heatable container for the water, an arrangement for applying hot water from above onto the towels which comprises a spray system (12) provided at the top (9) of the inner chamber (1), and a carrier for the towels, characterized in that
a) heating of the water is effected in a heating element system (3) comprising a heating element (7) and a water pipe (8), the water pipe being connected on the one hand to a portion container (19) and on the other hand to a spray system (12),
b) the heating element is disposed from below against the base plate (5) of the inner body (1) of the device,
c) the carriers (15) for the towels are shaped in the manner of steep gables and
d) the spray system (12) comprises the supply lines (12) as well as the pipes (14) disposed parallel to, and to the right and left of the gables (16) of the carriers (15), the pipes at their underside having outlet openings.

2. Device according to claim 1, characterized in that the heating element (7) takes the form of a tubular heating element and together with the water pipe (8) is cast into a flat-topped aluminium plate (6).

3. Device according to one of claims 1 or 2, characterized in that the carriers (15) are made of thin metal rods and are fastened on a metal frame, which may be pulled on rails (26) out of the inner body (1).

4. Device according to one or more of claims 1 to 3, characterized in that a storage container (22) is provided for filling the portion container (19) and a stop-cock (24) is disposed in the connecting line between said two containers.

## Revendications

1. Dispositif pour chauffer et humidifier des serviettes de visage, comprenant un réservoir chauffant pour l'eau, un arrangement pour répandre de l'eau chaude sur les serviettes depuis le haut, formé par un système pulvérisateur (12) fixé sur le plafond (9) du compartiment interne (1), et un support pour les serviettes, caractérisé en ce que
a) le chauffage de l'eau a lieu dans un système de chauffage (3) formé par un élément de chauffage (7) et un tuyau d'eau (8), le tuyau d'eau étant relié, d'une part, avec un réservoir de dosage (19) et, d'autre part, avec un système pulvérisateur (12),
b) l'élément de chauffage est situé sur le côté inférieur de la plaque formant le fond (5) de l'élément interne (1) du dispositif,
c) les supports (15) pour les serviettes ont la forme d'un pignon abrupt et
d) le système pulvérisateur (12) est formé par les conduites (12) ainsi que par les tuyaux (14) situés sur le côté droit et sur le côté gauche des pignons (16) des supports (15) et parallèles à ceux-ci, les tuyaux étant pourvus d'ouverture de sortie sur leur côté inférieur.

2. Dispositif selon la revendication 1, caractérisé en ce que l'élément de chauffage (7) a la forme d'un radiateur tubulaire et est fondu, en même temps que le tuyau d'eau (8), dans une plaque en aluminium (6) dont le dessus est plan.

3. Dispositif selon l'une quelconque des revendications 1 ou 2, caractérisé en ce que les supports (15) sont formés par des barres métalliques minces et sont fixés sur un cadre métallique qui peut être sorti de l'élément interne (1) sur des rails (26).

4. Dispositif selon l'une ou plusieurs des revendications 1 à 3, caractérisé en ce qu'un réservoir de stockage (22) est prévu pour le remplissage du réservoir de dosage (19) et en ce qu'un robinet d'arrêt (24) est situé dans la conduite qui relie les deux.
